# EUROPÄISCHE PATENTANMELDUNG

(11) **EP 1 538 035 A1**
(43) Veröffentlichungstag der Anmeldung: **08.06.2005**
(21) Anmeldenummer: 04027611.5
(22) Anmeldetag: 20.11.2004
(51) Int. Cl.: B60R 21/20

(54) **Sicherheitseinrichtung zum seitlichen Schutz zumindest des Kopf- und Thoraxbereichs**

(30) Priorität: 02.12.2003 DE 10356138
(71) Anmelder: DaimlerChrysler AG, 70567 Stuttgart (DE)
(72) Erfinder: Röhm, Michael, 71701 Schwieberdingen (DE); Schick, Ulrich, 72202 Nagold (DE)

(57) **Zusammenfassung**

Die Erfindung bezieht sich auf eine Sicherheitseinrichtung mit einem Gassack (3) zum seitlichen Schutz zumindest des oberen Bereichs einer in einem Fahrzeugsitz (1) eines Kraftfahrzeugs befindlichen Person (2) mit einem Gehäuse (4) zur Aufnahme des Gassacks (3) im inaktiven Zustand, der mittels eines Gasgenerators derart befüllt wird, dass er sich seitlich der Person (2) und im Wesentlichen parallel zur Längsmittelachse des Kraftfahrzeugs und bei Auftreten einer Störgröße in eine sich nach vorne erstreckende und in etwa geneigt verlaufende X-Richtung (7) entfaltet, deren Ebene mit der Standfläche des Fahrzeugs einen Winkel α zwischen ca. 5° und 40° einschließt. Das Gehäuse (4) ist in oder an einem Seitenteil der Karosserie (5) integriert, beispielsweise in einen Seitenholm (6). Der Gassack (3) deckt in aktiviertem Zustand zumindest den Kopf- und Thoraxbereich des Insassen (2) ab.

## Beschreibung

Die Erfindung bezieht sich auf eine Sicherheitseinrichtung mit einem Gassack zum seitlichen Schutz zumindest des oberen Bereichs einer in einem Fahrzeugsitz eines Kraftfahrzeugs befindlichen Person mit einem Gehäuse zur Aufnahme des Gassacks im inaktiven Zustand, der im inaktiven Zustand mittels eines Gasgenerators derart befüllbar ist, dass sich dieser seitlich der Person und im Wesentlichen parallel zur Längsmittelachse des Kraftfahrzeugs entfaltet.

Es ist bereits eine Sicherheitseinrichtung mit einem Gassack zum seitlichen Schutz zumindest des oberen seitlichen Bereichs einer im Fahrzeugsitz eines Kraftfahrzeugs befindlichen Person mit einem Gehäuse zur Aufnahme des Gassacks im inaktiven Zustand bekannt (EP 0 584 781 B1), der mittels eines Gasgenerators derart befüllt wird, dass er sich seitlich der Person und im Wesentlichen parallel zur Längsmittelachse des Kraftfahrzeugs nach unten entfaltet und dabei nur den Kopfbereich einer im Fahrzeug befindlichen Person abdeckt.

Der Erfindung liegt die Aufgabe zugrunde, eine Sicherheitseinrichtung mit einem Gassack zum seitlichen Schutz zumindest des oberen seitlichen Bereichs einer im Fahrzeugsitz eines Kraftfahrzeugs befindlichen Person derart auszubilden und anzuordnen, dass bei Auftreten einer Störgröße ein optimaler Schutz des Kopf- und Thoraxbereichs einer im Fahrzeug befindlichen Person gewährleistet ist.

Gelöst wird die Aufgabe erfindungsgemäß dadurch, dass das Gehäuse zur Aufnahme des Gassacks in oder an einem seitlich zum Fahrzeugsitz verlaufenden Seitenteil einer Fahrzeugkarosserie integriert ist und im aktiven Zustand zumindest den Kopf- und Thoraxbereich abdeckt. Hierdurch wird auf einfache und kosten-günstige Weise erreicht, dass sich bei einem auftretenden Verkehrsunfall der Gassack in alle Richtungen blitzartig befüllt, sich dabei seitlich von der im Fahrzeug befindlichen Person im Wesentlichen nach vorn erstreckt und dadurch den Kopf- und Thoraxbereich vollständig abdeckt. Dies wird auch dadurch erreicht, dass das Gehäuse zur Aufnahme des Gassacks in oder an einem seitlich zum Fahrzeugsitz verlaufenden Seitenteil der Fahrzeugkarosserie integriert ist.

Hierzu ist es vorteilhaft, dass das Gehäuse zur Aufnahme des Gassacks mit Bezug auf die Fahrtrichtung hinter dem Fahrzeugsitz und/oder der Person in oder an einem Seitenholm oder in der Fahrzeugkarosserie integriert ist und in etwa V-förmig oder U-förmig ausgebildet ist und sich von einer A-Säule bzw. vorderen Stelle am Seitenholm über den Thoraxbereich bis zum Gesäßbereich oder einer unteren Stelle an der B-Säule erstreckt, wobei sich der Gassacks bei Befüllung über die zwischen den beiden Stellen verlaufende Ebene hinaus entfaltet. Hierdurch kann sich bei auftretender Störgröße der Gassack nach vorne sehr schnell entfalten und dabei zumindest den Kopf- und Thoraxbereich und je nach Ausgestaltung des Gehäuses auch den Abdomen- und/oder den Gesäßbereich vollständig abdecken. Da sich der Gassack zwischen den beiden Stellen spannt und sich über die zwischen den beiden Stellen verlaufende Ebene hinaus entfaltet, wird ein optimaler seitlicher Schutz für die Insassen auch dann geschaffen, wenn das Fahrzeug als Cabriolet aus-gebildet ist.

Eine zusätzliche Möglichkeit ist gemäß einer Weiterbildung, dass sich der Gassack bei Auftreten einer Störgröße in eine sich nach vorne erstreckende und in etwa geneigt verlaufende X-Richtung entfaltet, deren durch die X-Richtung verlaufende Ebene mit der Standfläche des Fahrzeugs einen Winkel α zwischen ca. 5° und 40° oder 10° und 35° einschließt.

Ferner ist es vorteilhaft, dass die Seitenfläche des Gassacks im aktiven Zustand zumindest den Kopf- und Thoraxbereich und/oder den Gesäß- und Oberschenkelbereich abdeckt, wodurch der Sicherheitsschutz weiterhin verbessert wird.

Vorteilhaft ist es hierzu auch, dass das Gehäuse in seiner länglichen Ausdehnung zumindest dem Kopf- und Thoraxbereich der Person entspricht.

Gemäß einer bevorzugten Ausführungsform der erfindungsgemäßen Lösung ist schließlich vorgesehen, dass das Gehäuse aus zwei miteinander verbundenen Gehäuseabschnitten besteht, die einen Winkel β in etwa zwischen 110° und 160° einschließen.

Von besonderer Bedeutung ist für die vorliegende Erfindung, dass das Gehäuse des Gassacks in Teilen des Seitenholms und/oder in Teilen eines Dachholms des Fahrzeugs integriert ist.

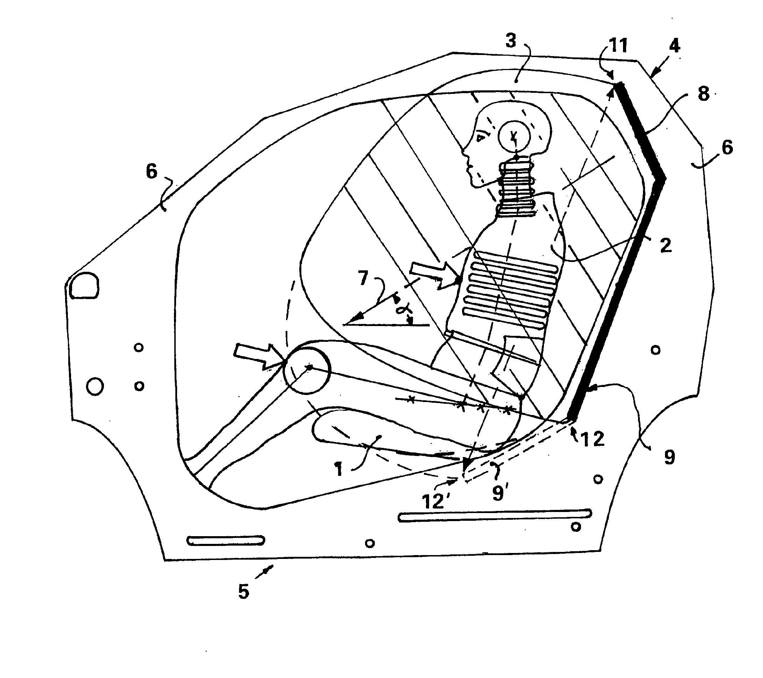

Weitere Vorteile und Einzelheiten der Erfindung sind in den Patentansprüchen und in der Beschreibung erläutert und in der Zeichnung dargestellt.

In der Zeichnung ist eine Sicherheitseinrichtung mit einem Gassack 3 bzw. Airbag zum seitlichen Schutz zumindest des Kopf- und Thoraxbereichs einer in einem Fahrzeugsitz 1 eines Kraftfahrzeugs befindlichen Person 2 dargestellt.

Ein Gehäuse 4 dient zur vollständigen Aufnahme des Gassacks 3 bzw. Airbagmoduls im inaktiven Zustand.

Wie aus der Zeichnung ferner hervorgeht, ist das Gehäuse 4 zur Aufnahme des Gassacks 3 seitlich an einer Fahrzeugkarosserie 5 untergebracht bzw. in einem nur schematisch dargestellten Seitenholm 6 und/oder in Teilen eines in der Zeichnung nur schematisch dargestellten Bodenholms bzw. einer B-Säule des Fahrzeugs integriert. Das Gehäuse 4 ist als einteiliges, durchgehendes Gehäuse 4 ausgebildet und besteht aus miteinander verbundenen Gehäuseabschnitten 8, 9, 9' , die in etwa V-förmig bzw. U-förmig zueinander ausgerichtet sind und einen Winkel β in etwa zwischen 110° und 160° einschließen.

Das an der Karosserie 5 befestigte Gehäuse 4 erstreckt sich von der A-Säule oder dem Seitenholm 6 bzw. einem oberen Punkt 11 bis zu einem Schweller-Punkt 12, bzw. 12' bzw. einer unteren Stelle im Bereich der B-Säule bzw. im Bereich des Fahrzeugsitzes 1.

Das Gehäuse 4 dient zur Aufnahme des Gassacks 3, der zum seitlichen Schutz zumindest des Kopf-, Thorax-, Abdomen- und/oder Gesäßbereichs dient.

Da das Gehäuse 4 und somit auch der Gassack 3 sich zwischen dem oberen bzw. vorderen Punkt 11 zu dem unteren Schweller-Punkt 12, bzw. 12' erstrecken, kann sich bei einer Störgröße der Gassack 3 großflächig entfalten und blitzartig den Kopf- und Thoraxbereich und/oder auch den Gesäß- und Oberschenkelbereich bzw. Abdomenbereich abdecken, wobei sich der Gassack 3 bei Befüllung über die zwischen den beiden Stellen verlaufende Ebene hinaus entfaltet und dadurch auch bei einem Cabriolet einen optimalen seitlichen Schutz für die Insassen bietet.

Mittels eines in der Zeichnung nicht dargestellten Gasgenerators wird der Gassack bzw. Airbag 3 derart befüllt, dass er sich seitlich der Person 2 und im Wesentlichen parallel zur Längsmittelachse des Kraftfahrzeugs in X-Richtung 7 entfaltet. Die in der X-Richtung 7 verlaufende Ebene verläuft in Fahrtrichtung geneigt nach unten und bildet mit der Horizontalen bzw. der Standfläche des Fahrzeugs einen Winkel α zwischen ca. 5° und 60° oder 15° und 45°.

Besonders vorteilhaft ist es, dass sich durch das Befüllen des Gassacks bzw. Airbags 3 sich dieser zwischen der vorderen Stelle 11 ab der A-Säule und der unteren Stelle 12,12' bzw. dem Schweller-Punkt an der B-Säule entfaltet und dabei derart gespannt wird, dass er den Kopfund Thoraxbereich und den Abdomenbereich abdeckt und hierdurch einen optimalen Schutz für den Insassen bietet.

Das Gehäuse 4 ist derart ausgebildet und angeordnet, dass es in seiner länglichen Ausdehnung dem seitlichen Umriss der Kopf- und/oder Rückenstruktur und dem Gesäßbereich der Person 2 entspricht.

Das Gehäuse 4 kann aus zwei oder mehreren miteinander verbundenen Gehäuseabschnitten 8, 9, 9' bestehen, die in etwa V-förmig oder auch in etwa U-förmig zueinander ausgerichtet sein können.

Wie aus der Zeichnung ferner hervorgeht, kann das Gehäuse 4 des Gassacks 3 auch in Teilen eines Seitenholms 6 des Fahrzeugs integriert sein.

## Patentansprüche

1. Sicherheitseinrichtung mit einem Gassack (3) zum seitlichen Schutz zumindest des oberen Bereichs einer in einem Fahrzeugsitz (1) eines Kraftfahrzeugs befindlichen Person (2) mit einem Gehäuse (4) zur Aufnahme des Gassacks (3), der im inaktiven Zustand mittels eines Gasgenerators derart befüllbar ist, dass er sich seitlich der Person (2) und im Wesentlichen parallel zur Längsmittelachse des Kraftfahrzeugs entfaltet,
**dadurch gekennzeichnet,**
**dass** das Gehäuse (4) zur Aufnahme des Gassacks (3) in oder an einem seitlich zum Fahrzeugsitz (1) verlaufenden Seitenteil einer Fahrzeugkarosserie (5) integriert ist und im aktiven Zustand zumindest den Kopf- und Thoraxbereich abdeckt.

2. Vorrichtung nach Anspruch 1,
**dadurch gekennzeichnet,**
**dass** das Gehäuse (4) zur Aufnahme des Gassacks (3) mit Bezug auf die Fahrtrichtung hinter dem Fahrzeugsitz (1) und/oder der Person (2) in oder an einem Seitenholm (6) oder in der Fahrzeugkarosserie (5) integriert ist und in etwa V-förmig oder U-förmig ausgebildet ist und sich von einer A-Säule bzw. vorderen Stelle (11) am Seitenholm (6) über den Thoraxbereich bis zum Gesäßbereich oder einer unteren Stelle (12,12') an der B-Säule erstreckt, wobei sich der Gassack (3) beim Befüllen über die zwischen den beiden Stellen (11,12,12') verlaufende Ebene hinaus entfaltet.

3. Vorrichtung nach Anspruch 1 oder 2,
**dadurch gekennzeichnet,**
**dass** sich der Gassack (3) bei Auftreten einer Störgröße in eine sich nach vorne erstreckende und in etwa geneigt verlaufende X-Richtung (7) entfaltet, deren durch die X-Richtung (7) verlaufende Ebene mit der Standfläche des Fahrzeugs einen Winkel α zwischen ca. 5° und 40° oder 10° und 35° einschließen kann.

4. Vorrichtung nach einem der vorhergehenden Ansprüche,
**dadurch gekennzeichnet,**
**dass** die Seitenfläche des Gassacks (3) im aktiven Zustand zumindest den Kopf- und Thoraxbereich und/oder den Gesäß- und Oberschenkelbereich abdeckt.

5. Vorrichtung nach einem der vorhergehenden Ansprüche,
**dadurch gekennzeichnet,**
**dass** das Gehäuse (4) in seiner länglichen Ausdehnung zumindest dem Kopf- und Thoraxbereich und/oder Gesäßbereich der Person (2) entspricht.

6. Vorrichtung nach einem der vorhergehenden Ansprüche,
**dadurch gekennzeichnet,**
**dass** das Gehäuse (4) aus zwei miteinander verbundenen Gehäuseabschnitten (8, 9) besteht, die einen Winkel β in etwa zwischen 110° und 160° einschließen.

7. Vorrichtung nach einem der vorhergehenden Ansprüche,
**dadurch gekennzeichnet,**
**dass** das Gehäuse (4) des Gassacks (3) in Teilen des Seitenholms (6) und/oder in Teilen eines Dachholms (6.1) des Fahrzeugs integriert ist.
